# EUROPEAN PATENT SPECIFICATION

(11) **EP 3 308 675 B1**
(45) Date of publication and mention of the grant of the patent: **29.05.2019**
(21) Application number: 17196108.9
(22) Date of filing: 12.10.2017
(51) Int. Cl.: A47C 7/38, B60N 2/838

(54) **ANGLE-ADJUSTER FOR A HEADREST**
WINKELEINSTELLELEMENT FÜR EINE KOPFSTÜTZE
AJUSTEUR D'ANGLE POUR UN APPUI-TÊTE

(30) Priority: 12.10.2016 CN 201621115827 U
(43) Date of publication of application: 18.04.2018
(73) Proprietor: Nisi, Cristian, 47121 Florli' (FC) (IT)
(72) Inventor: Jiang Tian Liang, Dongguan city (CN); Wang Yong, Dongguan city (CN)
(74) Representative: Frasson, Luca

(56) References cited:
- CN-B- 103 393 302
- CN-U- 202 457 357
- DE-U1-202015 105 433

## Description

### Technical field

The present invention concerns the field of furnishings for offices, homes, commercial outlets or other locations, and more precisely it refers to an angle-adjuster of the headrest of a chair, of an armchair, of a sofa, but also of a seat for vehicles, like for example automobiles or lorries.

### State of the art

Existing angle-adjusters for a headrest, like for example the adjuster according to Chinese patent no. CN202457357U, have a positioning mechanism that, through the cooperation of a gear, of a snap-locking system and of a spring, allows the angular positioning of the headrest then allowing the return thereof to the initial positioning. This type of adjuster, adopting gears and locking systems, has a high bulk and produces non-optimal results. Moreover, in the step of adjustment of the position it makes noise (the typical noise due to clicking/snapping) and it has a limited adjustment according to an angle generally comprised between 8 and 15 degrees. The document CN 103 393 302 B further discloses an angle-adjuster for a headrest according to the state of the art.

### Details of the invention

This invention has the objective of overcoming the drawbacks of the present technology, providing an angle-adjuster of the headrest with reduced bulk and number of components, with positive results ensured by a gearless mechanism that allows infinite and excellent adjustments and eliminates the noise due to the clicking/snapping of the snap-locking system.

The present invention has the purpose of solving the aforementioned technical problems through an angle-adjuster for a headrest as stated in main claim 1, and in particular, through an angle-adjuster for a headrest comprising a connection arm to the seat of a chair and a fixing unit to the headrest of said chair. According to the invention, said fixing unit to the headrest comprises a connection plate, said connection arm to the seat comprises a main connection body having a main through hole and a hole communicating with said main through hole.

Said hole houses a plurality of fan-shaped blocks equally distributed along the circumference of said hole and facing said main through hole. Between two adjacent fan-shaped blocks a positioning seat is defined in which a locking insert is housed.

The angle-adjuster comprises a stop flange having a through hole and a plurality of arched stop blocks projecting axially with respect to said stop flange towards the inside of said main through hole, so as to each face a respective positioning seat at a respective locking insert.

The angle-adjuster also comprises a cylindrical body extending longitudinally firmly constrained in rotation to said connection plate. Said cylindrical body passes through said main through hole of said main connection body, through said hole and through said through hole of said stop flange.

The portion of said inserts projecting radially towards the inside of said main through hole is configured to engage, through binding, with the side surface of said cylindrical body so as to lock the rotation of said cylindrical body inside said main through hole in a first direction of rotation, the rotation of said cylindrical body inside said main through hole in a second direction of rotation opposite to said first direction of rotation on the other hand being allowed.

The stop flange can be set in rotation at a predetermined angle between said connection arm and said fixing unit so that said arched blocks press against said inserts freeing them from the binding configuration with said cylindrical body and allow the rotation of said cylindrical body inside said main through hole also in said first direction of rotation.

Advantageously, the side surface of the cylindrical body is substantially smooth and continuous, i.e. devoid of radial projections, teeth, or corrugations.

Moreover, inside each of said fan-shaped blocks it is advantageously possible to form a housing seat of elastic means configured to press against a respective locking insert housed in a respective positioning seat adjacent to said fan-shaped block.

The angle-adjuster for a headrest advantageously comprises a cover configured to close said hole and rotating as a unit with said cylindrical body, said cover comprising, on its face facing said hole, at least one positioning milling, said stop flange comprising, on its face opposite the face from where said arched blocks project, at least one stop tooth adapted for sliding inside said positioning milling, said stop tooth abutting against an end of said positioning milling at said predetermined angle between said connection arm and said fixing unit and setting in rotation said stop flange for an amount of rotation such that said arched blocks press against said inserts freeing them from the binding configuration with said cylindrical body.

Advantageously, the angle-adjuster for a headrest comprises an inner insert-locking disc having a through hole, arranged inside said hole between said fan-shaped blocks and said stop flange. Said inner insert-locking disc comprises a plurality of positioning blocks projecting axially and each inserted in respective housing seats of said elastic means, to hold said elastic means inside said housing seats.

Advantageously, the connection plate has a central through hole, opposite to said main through hole of said main connection body, said central through hole being hexagonal in shape, said cylindrical body comprising a portion with hexagonal cross section adapted for engaging in said hexagonal central through hole.

Advantageously, the portion of said inserts projecting radially towards the inside of said main through hole has a protrusion projecting laterally towards the respective fan-shaped block and configured to ensure the binding of said insert against said side surface of said cylindrical body when it is rotated in said first direction of rotation inside said main through hole. Advantageously, such a laterally projecting protrusion of said inserts determines that a diagonal of the cross section of said inserts, said section having a substantially rectangular shape, has a greater length than the opposite diagonal. Said inserts are therefore configured to stick against the side surface of said cylindrical body at the vertex of said insert arranged on the diagonal with greater length.

Advantageously, said arched blocks project in said main through hole of said main connection body through said through hole of said inner insert-locking disc.

The exceptional result of this invention, compared with the existing technology, consists of the fact that the space occupied and the number of components are substantially reduced, with positive results thanks to a gearless mechanism that allows infinite and excellent adjustments and eliminates the clicking noise, as well as the fact that the structure and the relative components are stronger and longer-lasting.

### Description of the figures

Fig.1 illustrates the disassembled structure of this invention;
Fig.2 represents the main connection unit of the adjuster;
Fig.3 shows the structure of Fig.2 with a change of perspective;
Fig.4 represents the metallic connection and fixing unit of the headrest;
Fig.5 illustrates the stop flange;
Fig.6 shows the stop flange of Fig.5 with a change of perspective;
Fig.7 represents the inner insert-locking disc;
Fig.8 graphically represents the upper cover;
Fig.9 depicts the invention in a first position;
Fig.10 represents the invention in a second position;
Fig.11 shows a partial enlargement of Fig.9;
Fig.12 shows a partial enlargement of Fig.10.

### Detailed description:

Hereinafter a detailed description of the invention is provided with reference to the attached drawings and to the concrete implementation, so that understanding the advantages and the specific characteristics is even easier for the persons skilled in the art. These concrete representations are only for illustrative purposes and do not determine the extension of the scope of protection of the invention.

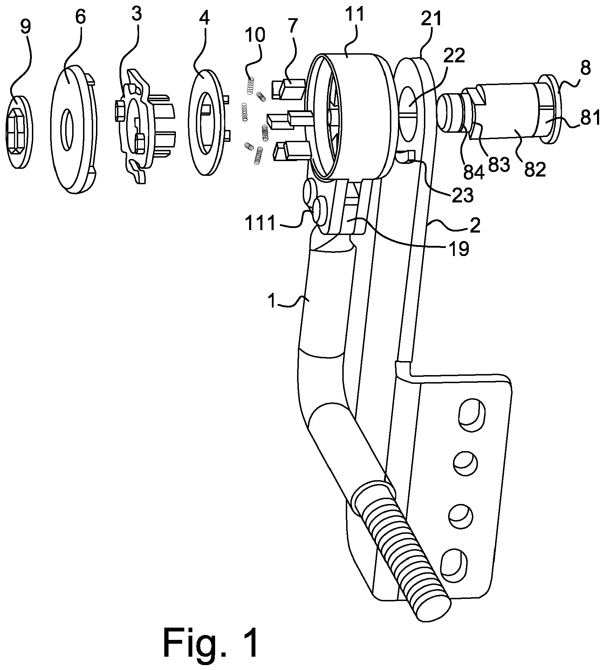

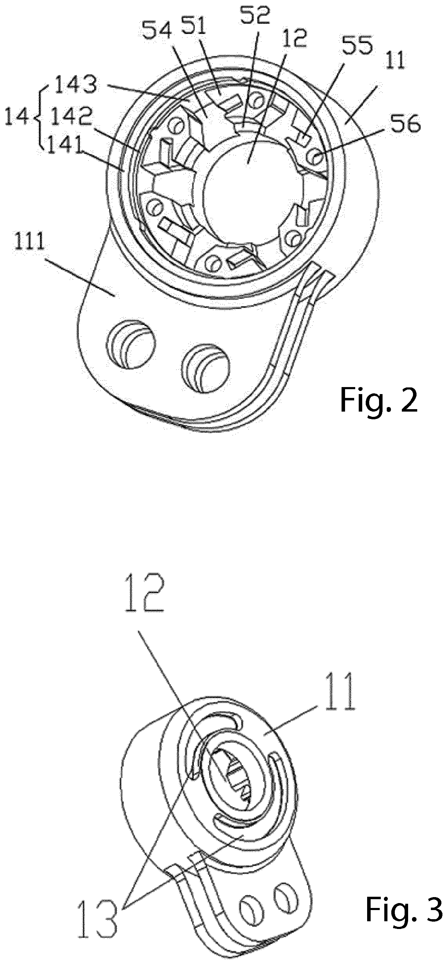

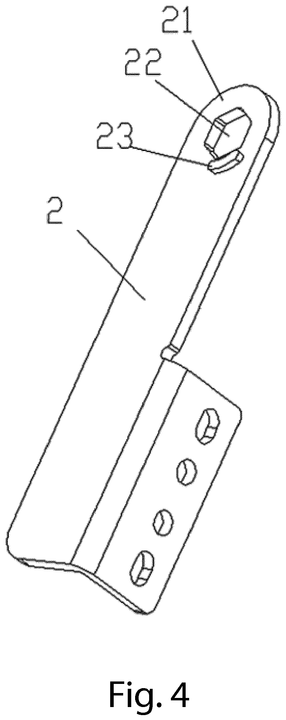

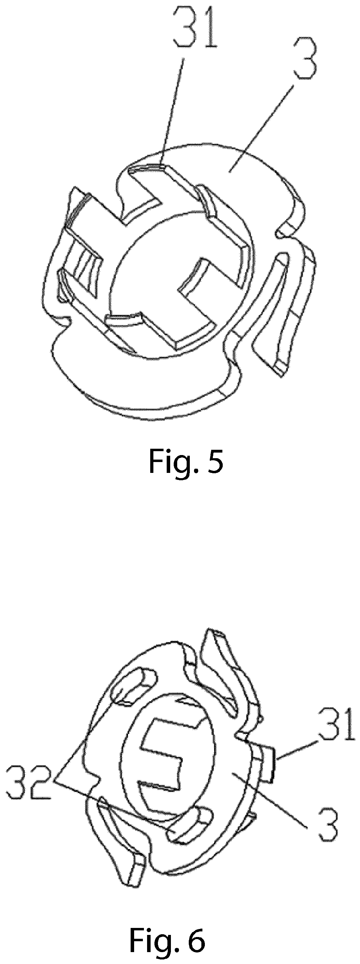

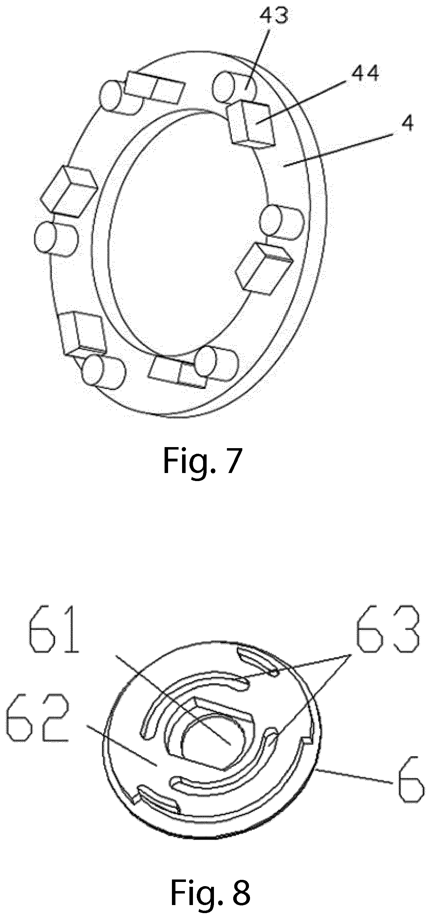

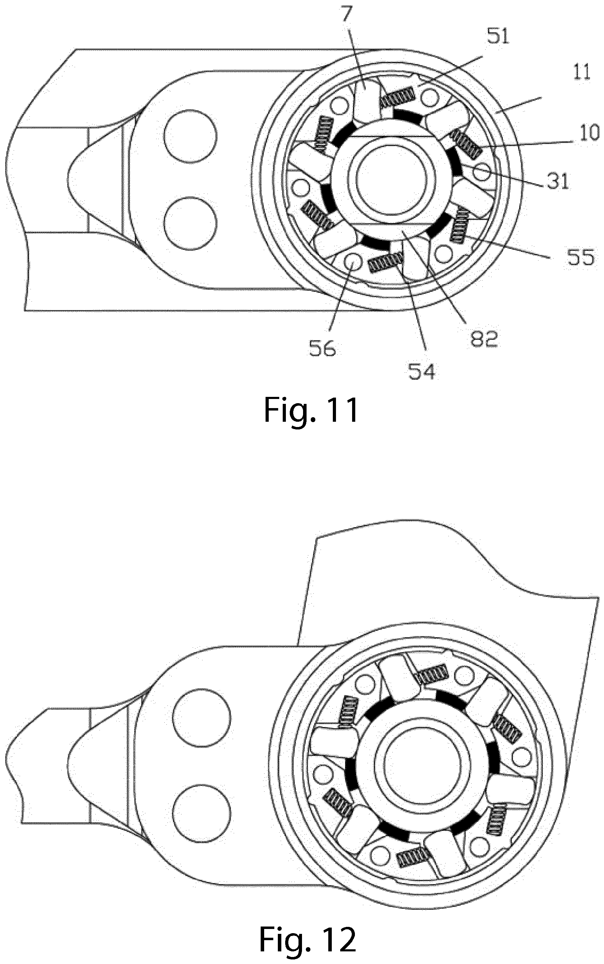

As shown by Fig.1 to Fig.12, the angle-adjuster for a headrest comprises a connection arm of the seat (1) and a metallic connection and fixing unit of the headrest (2) .

In the upper part of the connection unit of the headrest (2) there is a connection plate (21), at the centre of which there is a central through hole (22); in the lower part of the central through hole (22), on the left side of the connection plate (21), there is a sliding toothing (23). The upper part of the connection arm (1) of the seat has a main connection body (11) with a main through hole (12) at the centre opposite the central through hole (22) described above; the right side of the main connection body (11) has a rounded milling (13) in which the sliding toothing (23) is inserted; on the right side of the main body (11) there is a hole (14) with diameter that, proceeding from left to right, progressively decreases determining the first (141), the second (142) and the third section (143) of the hole (14), the latter section (143) communicates with the main hole (12) of the main connection body (11). On the lower end of the third section (143) of the hole (14) there is a series of fan-shaped blocks (51) equally divided and having the main hole (12) of the main connection body (11) as centre.

The fan-shaped blocks (51), close to the curved wall of the main hole (12) of the main connection body (11), have a stop milling (52); between two adjacent fan-shaped blocks (51) there is a positioning groove (54).

Iron inserts (7) are positioned in the positioning grooves (54), arranged between the lower end of the third section (143) of the hole (14) and the inner insert-locking disc (4).

Grooves (55) are formed in the fan-shaped blocks (51) that act as seats for springs (10). These springs (10) are indeed inserted in the grooves (55): one end of the spring (10) exerts a lower pressure on the bottom of the groove (55), the other end of the spring (10) presses against the inserts (7). The inner insert-locking disc (4) is inserted in the third section (143) of the hole (14) and presses against the left end of the fan-shaped block (51); the stop flange (3) is inserted inside the second section (142) of the hole (14) .

On the right side of the central hole of the stop flange (3) there is a series of arched stop blocks (31) that extend from left to right, these arched blocks (31) pass through the central hole of the inner insert-locking disc (4) and insert in the stop milling (52).

The upper cover (6) covers the left side of the main connection body (11).

A cylindrical body (8) extending longitudinally passes through the central through hole (22) of the connection plate (21), the main hole (12) of the main connection body (11), the central hole of the inner insert-locking disc (4), the central hole of the stop flange (3) and the hole (61) of the upper cover (6), and screws together with the ring nut (9).

The central hole (22) of the connection plate (21) is a hexagonal hole; the cylindrical body (8), proceeding from left to right, respectively has a portion with hexagonal cross section (81) and a side surface (82) in the form of a metallic bush (82). The latter, on the left side, has a joint (83) provided with a central screw nut (84); the portion with hexagonal section (81) is inserted at the centre of the central hole (22) of the connection plate (22); the metallic bush (82) is inserted between the hole (12) of the main connection body (11), the central hole of the inner insert-locking disc (4) and the central hole of the stop flange (3); the joint (83) is inserted in the central hole (61) of the upper cover (6); the ring nut (9) is screwed onto the screw nut (84).

Thereafter, on the right side of the inner insert-locking disc (4) positioning pins (43) and positioning blocks (44) are arranged, and each of them constitutes a positioning unit. Every positioning unit, having the central hole of the inner insert-locking disc (4) as centre, is on the right side of the inner insert-locking disc (4).

On the left side of the fan-shaped blocks (51) there are multiple cavities (56) for the positioning pins (43).

The positioning units correspond one by one to the fan-shaped blocks (51); every positioning pin (43) is inserted in the corresponding cavity (56); the positioning block (44) is inserted in the positioning groove (55) of the corresponding spring (10); each spring (10) is between the positioning block (44) and the left inner surface of the groove (55); the left side of the fan-shaped block (51) is arranged close to the right end of the inner insert-locking disc (4).

Then, on the left side of the stop flange (3) there are stop teeth (32); on the right side of the cover (6) there is a circular flange (62) arranged at the centre of the first section (141) of the hole (14); on the circular flange (62) there is a positioning milling (63) inside which the stop teeth (32) are located.

The upper part of the connection arm of the seat (1) has a connection portion (19) that extends upwards. The lower end of the main connection body (11) consists of a connection portion (111) that extends downwards. The upper connection portion (19) and the lower connection portion (111) are fixed through bolts.

Moreover, the lower end of the connection unit of the headrest (2) has a connection block. The rod of the connection arm of the seat (1) has a curved connection part threaded at the end.

Finally, the metal inserts (7) engage, on one side, with the cylindrical wall of the side surface (82) of the cylindrical body (8), on the other side with the inner wall of the third section (143) of the hole (14).

The metal inserts (7) are arranged between the arched stop blocks (31) of the stop flange (3).

### Operation:

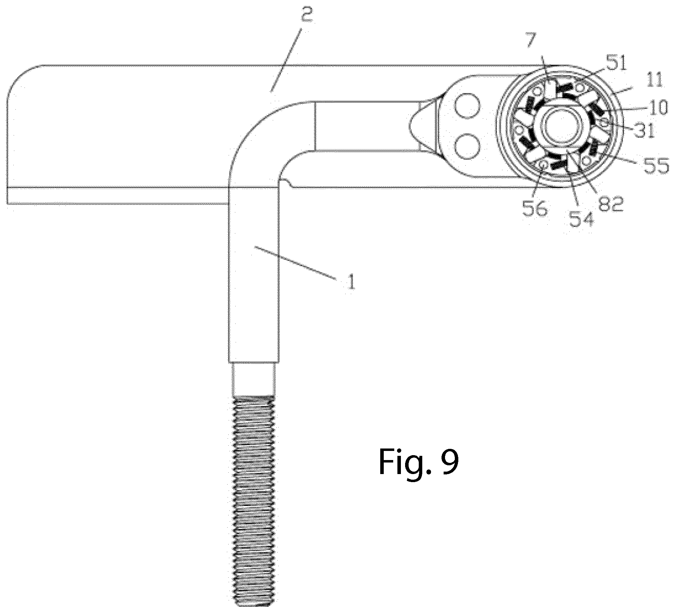

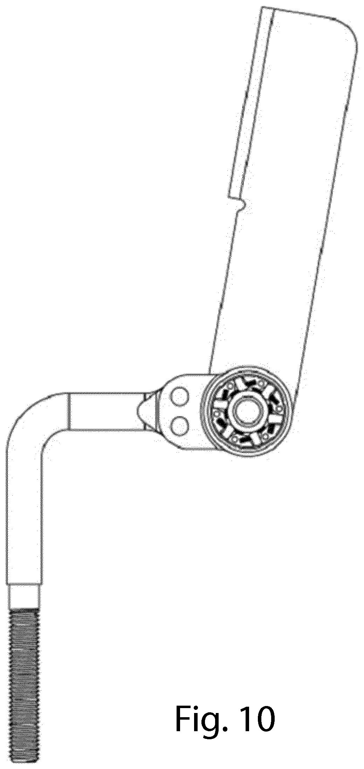

As illustrated in Fig.9 and in Fig.10, the present structure controls the rotation angle through the length of the rounded milling (13) and/or of the positioning milling (63), and adjusts the rotation direction of the cylindrical body (8) and therefore of the connection unit of the headrest (2) through the control of the positioning of the inserts (7) inside the respective seats (54).

As shown by Fig.9, when the connection plate (21) and the upper cover (6) are properly assembled with the cylindrical body (8), they lock together; when the connection plate (21) rotates, the sliding toothing (23) slides in the rounded milling (13), while the upper cover (6) rotates; when the connection plate (21) is rotated to the maximum degree of set angle (i.e. the stop flange 3 and the upper cover 6 have the same rotation angle, while the connection plate 21 and the rounded milling 13 of the main connection body 11 have a rotation angle of 120 degrees more with respect to that of the stop flange 3 with the positioning milling 63 of the upper cover 6), the upper cover (6) actuates the rotation of the stop flange (3), with rotation angle of 120 degrees. After having rotated to 120 degrees, the arched stop blocks (31) of the stop flange (3) press the inserts (7) (see Fig.10), ensuring that the latter (7) separate from the metallic bush (82), in this way stopping the limitation effect of the rotation of the same bush (82), and thus obtaining the return of the rotation structure.

The aforementioned examples have the sole purpose of explaining the invention, and are not limiting, and those skilled in the art can bring changes and variations without however departing from the scope of this invention.

Consequently, all of the proposed equivalent techniques are included in the scope of the present invention, and the extension of its protection must be defined by the patent requirement.

## Claims

1. Angle-adjuster for a headrest, comprising a connection arm (1) to the seat of a chair and a fixing unit (2) to the headrest of said chair, **characterised in that** said fixing unit (2) to the headrest comprises a connection plate (21), said connection arm (1) to the seat comprising a main connection body (11) having a main through hole (12), and a hole (14) communicating with said main through hole (12), said hole (14) housing a plurality of fan-shaped blocks (51) equally distributed along the circumference of said hole (14) and facing said main through hole (12), between two adjacent fan-shaped blocks (51) a positioning seat (54) is defined in which a locking insert (7) is housed, said angle-adjuster comprising a stop flange (3) having a through hole and a plurality of arched stop blocks (31) axially projecting with respect to said stop flange (3) towards the inside of said main through hole (12), so as to each face a respective positioning seat (54) at a respective locking insert (7), said angle-adjuster comprising a cylindrical body (8) extending longitudinally firmly constrained in rotation to said connection plate (21), said cylindrical body (8) passing through said main through hole (12) of said main connection body (11), through said hole (14), and through said through hole of said stop flange (3), the portion of said inserts (7) projecting radially towards the inside of said main through hole (12) being configured to engage, through binding, with the side surface (82) of said cylindrical body (8) so as to lock the rotation of said cylindrical body (8) inside said main through hole (12) in a first direction of rotation, the rotation of said cylindrical body (8) inside said main through hole (12) in a second direction of rotation opposite to said first direction of rotation on the other hand being allowed, said stop flange (3) being able to be set in rotation at a predetermined angle between said connection arm (1) and said fixing unit (2) so that said arched blocks (31) press against said inserts (7) freeing them from the binding configuration with said cylindrical body (8) and allowing the rotation of said cylindrical body (8) inside said main through hole (12) also in said first direction of rotation.

2. Angle-adjuster for a headrest, according to claim 1, **characterised in that** inside each of said fan-shaped blocks (51) a seat (55) is formed for housing elastic means (10) configured to press against a respective locking insert (7) housed in a respective positioning seat (54) adjacent to said fan-shaped block (51).

3. Angle-adjuster for a headrest, according to claim 1 or 2, **characterised in that** it comprises a cover (6) configured to close said hole (14) and rotating as a unit with said cylindrical body (8), said cover (6) comprising, on its face facing said hole (14), at least one positioning milling (63), said stop flange (3) comprising, on its face opposite to the face from where said arched blocks (31) project, at least one stop tooth (32) adapted for sliding inside said positioning milling (63), said stop tooth (32) abutting against an end of said positioning milling (63) at said predetermined angle between said connection arm (1) and said fixing unit (2) and setting in rotation said stop flange (3) for an amount of rotation such that said arched blocks (31) press against said inserts (7) freeing them from the binding configuration with said cylindrical body (8).

4. Angle-adjuster for a headrest, according to one or more of the previous claims, **characterised in that** it comprises an inner insert-locking disc (4) having a through hole, arranged inside said hole (14) between said fan-shaped blocks (51) and said stop flange (3), said inner insert-locking disc (4) comprising a plurality of positioning blocks (44) projecting axially and each inserted in respective housing seats (55) of said elastic means (10), to hold said elastic means (10) inside said housing seats (55).

5. Angle-adjuster for a headrest, according to one or more of the previous claims, **characterised in that** said connection plate (21) has a central through hole (22), opposite to said main through hole (12) of said main connection body (11), said central through hole (22) being hexagonal in shape, said cylindrical body (8) comprising a portion with hexagonal cross section (81) adapted for engaging in said hexagonal central through hole (22).

6. Angle-adjuster for a headrest, according to one or more of the previous claims, **characterised in that** said portion of said inserts (7) projecting radially towards the inside of said main through hole (12) has a protrusion projecting laterally towards the respective fan-shaped block (51) and configured to ensure the binding of said insert (7) against said side surface (82) of said cylindrical body (8) when it is rotated in said first direction of rotation inside said main through hole (12).

7. Angle-adjuster for a headrest, according to one or more of the previous claims, **characterised in that** said arched blocks (31) project in said main through hole (12) of said main connection body (11) through said through hole of said inner insert-locking disc (4).

## Patentansprüche

1. Winkeleinstellelement für Kopfstütze, umfassend einen Verbindungsarm (1) mit dem Sitz eines Stuhls und eine Befestigungseinheit (2) mit der Kopfstütze des Stuhls, **dadurch gekennzeichnet, dass** die Befestigungseinheit (2) mit der Kopfstütze eine Verbindungsplatte (21) umfasst, wobei der Verbindungsarm (1) mit dem Sitz einen Hauptverbindungskörper (11) mit einem Hauptdurchgangsloch (12) umfasst und ein Loch (14), das mit dem Hauptdurchgangsloch (12) in Verbindung steht, wobei das Loch (14) eine Mehrzahl von gleichmäßig über den Umfang des Loches (14) verteilten, dem Hauptdurchgangsloch (12) zugewandten, fächerförmigen Blöcken (51) aufnimmt, wobei zwischen zwei benachbarten fächerförmigen Blöcken (51) ein Positioniersitz (54) definiert ist, in dem ein Verriegelungseinsatz (7) untergebracht ist, wobei das Winkeleinstellelement einen Anschlagflansch (3) mit einem Durchgangsloch und einer Mehrzahl von gebogenen Anschlagblöcken (31) umfasst, die in Bezug auf den Anschlagflansch (3) zur Innenseite des Hauptdurchgangsloches (12) axial auskragen, um einem jeweiligen Positioniersitz (54) an einem jeweiligen Verriegelungseinsatz (7) zugewandt zu sein, wobei das Winkeleinstellelement einen zylindrischen Körper (8) aufweist, der sich längs erstreckt und in der Drehung fest mit der Verbindungsplatte (21) verbunden ist, wobei der zylindrische Körper (8) durch das Hauptdurchgangsloch (12) des Hauptverbindungskörpers (11), durch das Loch (14) und durch das Durchgangsloch des Anschlagflansches (3) hindurchgeht, wobei der Abschnitt der Einsätze (7), die radial zur Innenseite des Hauptdurchgangsloches (12) auskragen, ausgebildet ist, um durch Bindung die Seitenfläche (82) des zylindrischen Körpers in Eingriff zu nehmen(8), um die Drehung des zylindrischen Körpers (8) im Inneren des Hauptdurchgangsloches (12) in eine erste Drehrichtung zu sperren, wohingegen die Drehung des zylindrischen Körpers (8) im Inneren des Hauptdurchgangsloches (12) in eine zweite Drehrichtung entgegen der ersten Drehrichtung erlaubt ist, wobei der Anschlagflansch (3) in der Lage ist, in einem vorgegebenen Winkel zwischen dem Verbindungsarm (1) und der Befestigungseinheit (2) in Drehung versetzt zu werden, so dass die gebogenen Blöcke (31) gegen die Einsätze (7) gedrückt und aus der Bindungskonfiguration mit dem zylindrischen Körper (8) befreit werden und die Drehung des zylindrischen Körpers (8) im Inneren des Hauptdurchgangsloches (12) auch in die erste Drehrichtung erlaubt wird.

2. Winkeleinstellelement für Kopfstütze nach Anspruch 1, **dadurch gekennzeichnet, dass** im Inneren eines jeden der fächerförmigen Blöcke (51) ein Sitz (55) ausgestaltet ist, um elastische Mittel (10) aufzunehmen, die ausgestaltet sind, um gegen einen jeweiligen Verriegelungseinsatz (7) zu drücken, der in einem jeweiligen Positioniersitz (54) neben dem fächerförmigen Block (51) untergebracht ist.

3. Winkeleinstellelement für Kopfstütze nach Anspruch 1 oder 2, **dadurch gekennzeichnet, dass** es einen Deckel (6) umfasst, der ausgebildet ist, um das Loch (14) zu schließen und sich als eine Einheit mit dem zylindrischen Körper (8) zu drehen, wobei der Deckel (6) auf seiner dem Loch (14) zugewandten Seite wenigstens eine Positionierfräsung (63) umfasst, wobei der Anschlagflansch (3) auf der Seite, die der Seite gegenüberliegt, aus der die gebogenen Blöcke (31) auskragen, wenigstens einen Anschlagzahn (32) aufweist, der dazu geeignet ist, im Inneren der Positionierfräsung (63) zu gleiten, wobei der Anschlagzahn (32) gegen ein Ende der Positionierfräsung (63) an dem vorgegebenen Winkel zwischen dem Verbindungsarm (1) und der Befestigungseinheit (2) in Anschlag geht und den Anschlagflansch (3) um einen derartigen Drehwinkel in Drehung versetzt, dass die gebogenen Blöcke (31) gegen die Einsätze (7) drücken und sie aus der Bindungskonfiguration mit dem zylindrischen Körper (8) befreien.

4. Winkeleinstellelement für Kopfstütze nach einem oder mehreren der vorstehenden Ansprüche, **dadurch gekennzeichnet, dass** es eine innere Einsatzverriegelungsscheibe (4) mit einem Durchgangsloch umfasst, die im Inneren des Loches (14) zwischen den fächerförmigen Blöcken (51) und dem Anschlagflansch (3) angeordnet ist, wobei die innere Einsatzverriegelungsscheibe (4) eine Mehrzahl von Positionierblöcken (44) umfasst, die axial auskragen und jeweils in jeweilige Gehäusesitze (55) der elastischen Mittel (10) eingefügt sind, um die elastischen Mittel (10) im Inneren der Gehäusesitze (55) zu halten.

5. Winkeleinstellelement für Kopfstütze nach einem oder mehreren der vorstehenden Ansprüche, **dadurch gekennzeichnet, dass** die Verbindungsplatte (21) ein dem Hauptdurchgangsloch (12) des Hauptverbindungskörpers (11) gegenüberliegendes, zentrales Durchgangsloch (22) aufweist, wobei das zentrale Durchgangsloch (22) sechseckig ist, wobei der zylindrische Körper (8) einen Abschnitt mit sechseckigem Querschnitt (81) aufweist, der zum Eingriff in das sechseckige, zentrale Durchgangsloch (22) geeignet ist.

6. Winkeleinstellelement für Kopfstütze nach einem oder mehreren der vorstehenden Ansprüche, **dadurch gekennzeichnet, dass** der Abschnitt der radial zum Inneren des Hauptdurchgangsloches (12) auskragenden Einsätze (7) eine seitlich zum jeweiligen fächerförmigen Block (51) hin auskragende Vorwölbung aufweist und ausgebildet ist, um die Bindung des Einsatzes (7) gegen die Seitenfläche (82) des zylindrischen Körpers (8) zu gewährleisten, wenn er in die erste Drehrichtung im Inneren des Hauptdurchgangsloches (12) gedreht wird.

7. Winkeleinstellelement für Kopfstütze nach einem oder mehreren der vorstehenden Ansprüche, **dadurch gekennzeichnet, dass** die gebogenen Blöcke (31) durch das Durchgangsloch der inneren Einsatzverriegelungsscheibe (4) in das Hauptdurchgangsloch (12) des Hauptverbindungskörpers (11) auskragen.

## Revendications

1. Ajusteur d'angle pour un appuie-tête, comprenant un bras de connexion (1) au siège d'une chaise et une unité de fixation (2) à l'appuie-tête de ladite chaise, **caractérisé en ce que** ladite unité de fixation (2) à l'appuie-tête comprend une plaque de connexion (21), ledit bras de connexion (1) au siège comprenant un corps de connexion principal (11) ayant un trou traversant principal (12), et un trou (14) communiquant avec ledit trou traversant principal (12), ledit trou (14) logeant une pluralité de blocs en forme d'éventail (51) distribués équitablement le long de la circonférence dudit trou (14) et faisant face audit trou traversant principal (12), entre deux blocs en forme d'éventail adjacents (51) est défini un siège de positionnement (54) dans lequel est logée une insertion de verrouillage (7), ledit ajusteur d'angle comprenant une bride d'arrêt (3) ayant un trou traversant et une pluralité de blocs d'arrêt arqués (31) faisant saillie de façon axiale par rapport à ladite bride d'arrêt (3) vers l'intérieur dudit trou traversant principal (12), afin que chacun fasse face à un siège de positionnement respectif (54) dans une insertion de verrouillage respective (7), ledit ajusteur d'angle comprenant un corps cylindrique (8) s'étendant de façon longitudinale fermement lié en rotation à ladite plaque de connexion (21), ledit corps cylindrique (8) passant à travers ledit trou traversant principal (12) dudit corps de connexion principal (11), à travers ledit trou (14), et à travers ledit trou traversant de ladite bride d'arrêt (3), la partie desdites insertions (7) faisant saillie de façon radiale vers l'intérieur dudit trou traversant principal (12) étant configuré pour venir en prise, au moyen d'une attache, avec la surface latérale (82) dudit corps cylindrique (8) afin de bloquer la rotation dudit corps cylindrique (8) à l'intérieur dudit trou traversant principal (12) dans une première direction de rotation, la rotation dudit corps cylindrique (8) à l'intérieur dudit trou traversant principal (12) dans une deuxième direction de rotation opposée à la première direction de rotation étant d'autre part autorisée, ladite bride d'arrêt (3) pouvant être mise en rotation selon un angle prédéterminé entre ledit bras de connexion (1) et ladite unité de fixation (2) de sorte que lesdits blocs arqués (31) exercent une pression contre lesdites insertions (7) en les libérant de la configuration d'attache avec ledit corps cylindrique (8) et autorisant la rotation dudit corps cylindrique (8) à l'intérieur dudit trou traversant principal (12) de même dans ladite première direction de rotation.

2. Ajusteur d'angle pour un appuie-tête, selon la revendication 1, **caractérisé en ce que**, à l'intérieur de chacun desdits blocs en forme d'éventail (51), un siège (55) est formé pour loger des moyens élastiques (10) configurés pour exercer une pression contre une insertion de verrouillage (7) respective logée dans un siège de positionnement (54) respectif adjacent audit bloc en forme d'éventail (51).

3. Ajusteur d'angle pour un appuie-tête, selon la revendication 1 ou 2, **caractérisé en ce qu'**il comprend une couverture (6) configurée pour fermer ledit trou (14) et pivotant comme une unité avec ledit corps cylindrique (8), ladite couverture (6) comprenant, sur son côté faisant face audit trou (14), au moins un fraisage de positionnement (63), ladite bride d'arrêt (3) comprenant, sur son côté opposé au côté à partir duquel lesdits blocs arqués (31) font saillie, au moins une dent d'arrêt (32) adaptée pour coulisser à l'intérieur dudit fraisage de positionnement (63), ladite dent d'arrêt (32) buttant contre une extrémité dudit fraisage de positionnement (63) en correspondance dudit angle prédéterminé entre ledit bras de connexion (1) et ladite unité de fixation (2) et mettant en rotation ladite bride d'arrêt (3) pour une quantité de rotation de sorte que lesdits blocs arqués (31) exercent une pression contre lesdites insertions (7) en les libérant de la configuration d'attache avec ledit corps cylindrique (8).

4. Ajusteur d'angle pour un appuie-tête, selon une ou plusieurs des revendications précédentes, **caractérisé en ce qu'**il comprend un disque de verrouillage-d'insertion interne (4) ayant un trou traversant, disposé à l'intérieur dudit trou (14) entre lesdits blocs en forme d'éventail (51) et ladite bride d'arrêt (3), ledit disque de verrouillage-d'insertion interne (4) comprenant une pluralité de blocs de positionnement (44) faisant saillie de façon axiale et qui sont chacun insérés dans les sièges de logement (55) respectifs desdits moyens élastiques (10), pour maintenir lesdits moyens élastiques (10) à l'intérieur desdits sièges de logement (55) .

5. Ajusteur d'angle pour un appuie-tête, selon une ou plusieurs des revendications précédentes, **caractérisé en ce que** ladite plaque de connexion (21) a un trou traversant central (22), opposé audit trou traversant principal (12) dudit corps de connexion principal (11), ledit trou traversant central (22) étant en forme hexagonale, ledit corps cylindrique (8) comprenant une partie avec une section transversale hexagonale (81) adaptée pour venir en prise avec ledit trou traversant central hexagonale (22).

6. Ajusteur d'angle pour un appuie-tête, selon une ou plusieurs des revendications précédentes, **caractérisé en ce que** ladite partie desdites insertions (7) faisant saillie de façon radiale à l'intérieur dudit trou traversant principal (12) a une saillie se projetant de façon latérale vers le bloc en forme d'éventail (51) respectif et configurée pour assurer l'attache de ladite insertion (7) contre ladite surface latérale (82) dudit corps cylindrique (8) quand elle est faite pivoter dans ladite première direction de rotation à l'intérieur dudit trou traversant principal (12).

7. Ajusteur d'angle pour un appuie-tête, selon une ou plusieurs des revendications précédentes, **caractérisé en ce que** lesdits blocs arqués (31) font saillie dans ledit trou traversant principal (12) dudit corps de connexion principal (11) à travers ledit trou traversant dudit disque de verrouillage-d'insertion interne (4).
